# EUROPEAN PATENT APPLICATION

(11) **EP 3 567 535 A1**
(43) Date of publication of application: **13.11.2019**
(21) Application number: 18758261.4
(22) Date of filing: 12.02.2018
(51) Int. Cl.: G06Q 20/40, H04L 29/06, G06F 3/01

(54) **VIRTUAL REALITY SCENE-BASED BUSINESS VERIFICATION METHOD AND DEVICE**

(30) Priority: 23.02.2017 CN 201710100962
(71) Applicant: Alibaba Group Holding Limited, George Town, Grand Cayman (KY)
(72) Inventor: WU, Jun, Hangzhou Zhejiang 311121 (CN)
(74) Representative: Branderhorst, Matthijs Pieter Arie
(86) International application number: PCT/CN2018/076532
(87) International publication number: WO 2018/153311

(57) **Abstract**

This application discloses a virtual reality (VR) scene-based service verification method. The method can be applicable to a VR client. The method includes: detecting a target service triggered by a visual focus of a user in a VR scene, wherein the target service is a user service requiring security verification; using a pre-configured eye recognition hardware to acquire a plurality of eye physiological features from the user; comparing one of the plurality of eye physiological features against a corresponding pre-stored eye physiological feature sample, and determining, based on a comparison result, whether the security verification of the target service has succeeded; if it is determined that the security verification of the target service has failed, then continuing the comparison of one or more other eye physiological features of the plurality of eye physiological features against one or more corresponding pre-stored eye physiological feature samples, and determining, based on a comparison result, whether the security verification of the target service has succeeded. This method can improve the accuracy of service security verification based on an eye physiological feature.

## Description

### TECHNICAL FIELD

This application relates to the field of computer application, particularly to a virtual reality scene-based service verification method and device.

### BACKGROUND

Virtual Reality (VR) technology is a technology that comprehensively utilizes a computer graphics system and various control interfaces to generate an interactive three-dimensional environment on a computer so as to provide a user with an immersive sense. The advancements in VR technology and related hardware significantly increase the number of scenarios in which VR technology can be used.

However, although the VR technology can provide the user with a vivid immersive sense, if a target service (e.g., a payment service) requiring security verification is executed in the VR scene, how to quickly verify the security of the target service, while the user wearing a VR terminal enjoying an immersive experience, is of great importance for improving the user experience.

### SUMMARY

This application proposes a virtual reality (VR) scene-based service verification method, applicable to a VR client, including:
detecting a target service triggered by a visual focus of a user in a VR scene, where the target service is a user service requiring security verification;
using a pre-configured eye recognition hardware to acquire a plurality of eye physiological features from the user;
comparing one of the plurality of eye physiological features against a corresponding pre-stored eye physiological feature sample, and determining, based on a comparison result, whether the security verification of the target service has succeeded; and
if it is determined based on the comparison result that the security verification of the target service has failed, then continuing the comparison of one or more other eye physiological features of the plurality of eye physiological features against one or more corresponding pre-stored eye physiological feature samples, and determining, based on a comparison result, whether the security verification of the target service has succeeded.

This application further proposes a virtual reality (VR) scene-based service verification device, applicable to a VR client, including:
a detection module, configured to detect a target service triggered by a visual focus of a user in a VR scene, where the target service is a user service requiring security verification;
an acquisition module, configured to use a pre-configured eye recognition hardware to acquire a plurality of eye physiological features from the user; and
a verification module, configured to compare one of the plurality of eye physiological features against a corresponding pre-stored eye physiological feature sample, and determine, based on a comparison result, whether the security verification of the target service has succeeded; and
if it is determined based on the comparison result that the security verification of the target service has failed, then continue the comparison of one or more other eye physiological features of the plurality of eye physiological features against one or more corresponding pre-stored eye physiological feature samples, and determine, based on a comparison result, whether the security verification of the target service has succeeded.

In this application, after the VR client detects the target service requiring security verification triggered by the visual focus of the user in the VR scene, the pre-configured eye recognition hardware may be used to acquire a plurality of eye physiological features from the user, one of the plurality of eye physiological features may be compared against the corresponding pre-stored eye physiological feature sample, and whether the security verification of the target service has succeeded may be determined based on a comparison result; if it is determined based on the comparison result that the security verification of the target service has failed, one or more other eye physiological features of the plurality of eye physiological features may continue to be compared against one or more corresponding pre-stored eye physiological feature samples, and whether the security verification of the target service has succeeded may be determined again based on a comparison result. Thus, when the user triggers the target service requiring security verification through the visual focus in the VR scene, the eye recognition hardware configured in a VR terminal can be used to acquire a plurality of eye physiological features from the user, the plurality of eye physiological features are matched with the corresponding pre-stored eye physiological feature samples respectively, and the security verification of the target service may be quickly completed in the VR scene, thereby guaranteeing the security of the service executed by the user in the VR scene, and reducing the interaction complexity of the service security verification. At the same time, the plurality of complementary eye physiological features can minimize the probability of security verification failure caused by the distortion of the acquired eye physiological features, and then improve the accuracy of the service security verification based on the eye physiological features.

### BRIEF DESCRIPTION OF THE DRAWINGS

FIG. 1 is a flow diagram of a VR scene-based service verification method according to an embodiment of this application;
FIG. 2 is a logic block diagram of a VR scene-based service verification device according to an embodiment of this application; and
FIG. 3 is a hardware structure diagram of a VR terminal carrying the VR scene-based service verification device according to an embodiment of this application.

### DETAILED DESCRIPTION OF THE INVENTION

This application is directed to providing a technical solution that a user, while wearing a VR terminal to enjoy an immersive experience, uses an intuitive interaction mode such as visual focus control, to quickly trigger a target service requiring security verification. A plurality of complementary eye physiological features of the user are acquired by an eye recognition hardware configured in a VR client, and the security of the target service is quickly verified in a VR scene.

After the VR client detects the target service requiring security verification triggered by the visual focus of the user in the VR scene, the pre-configured eye recognition hardware is used to acquire a plurality of eye physiological features from the user, one of the plurality of eye physiological features is compared against a corresponding pre-stored eye physiological feature sample, and whether the security verification of the target service has succeeded is determined based on a comparison result; if it is determined based on the comparison result that the security verification of the target service has failed, one or more other eye physiological features of the plurality of eye physiological features are continued to be compared against one or more corresponding pre-stored eye physiological feature samples, and whether the security verification of the target service has succeeded is determined again based on a comparison result. Thus, when the user triggers the target service requiring security verification through the visual focus in the VR scene, the eye recognition hardware configured in the VR terminal can be used to acquire a plurality of eye physiological features from the user, the plurality of eye physiological features are matched with the corresponding pre-stored eye physiological feature samples respectively, and the security verification of the target service is quickly completed in the VR scene, thereby guaranteeing the security of the service executed by the user in the VR scene, and reducing the interaction complexity of the service security verification. At the same time, the plurality of complementary eye physiological features can minimize the probability of security verification failure caused by the distortion of the acquired eye physiological features, and then improve the accuracy of the service security verification based on the eye physiological features.

For example, when the technical solution of this application is applied to a fast payment scene in the VR scene, the user can control the position of the visual focus in the VR scene by rotating eyeballs which is an intuitive interaction mode to trigger a fast payment service; after the user triggers the fast payment service in the VR scene, the VR client can acquire a plurality of complementary eye physiological features (e.g., eyeprint feature + iris feature) of the user through the eye recognition hardware configured in the VR terminal, compare the plurality of acquired eye physiological features against the pre-stored eye physiological feature samples preserved by the user, and quickly complete the security verification for the payment service, so that the user no longer needs to input a payment password by a complex interaction mode in the VR scene to verify the security of the payment service, and the complexity of the user to trigger the payment service and to verify the security of the payment service can be reduced while the payment security is ensured. At the same time, the plurality of complementary eye physiological features can also improve the accuracy of the service security verification based on the eye physiological features.

This technical solution is described below with reference to specific embodiments and specific application scenes.

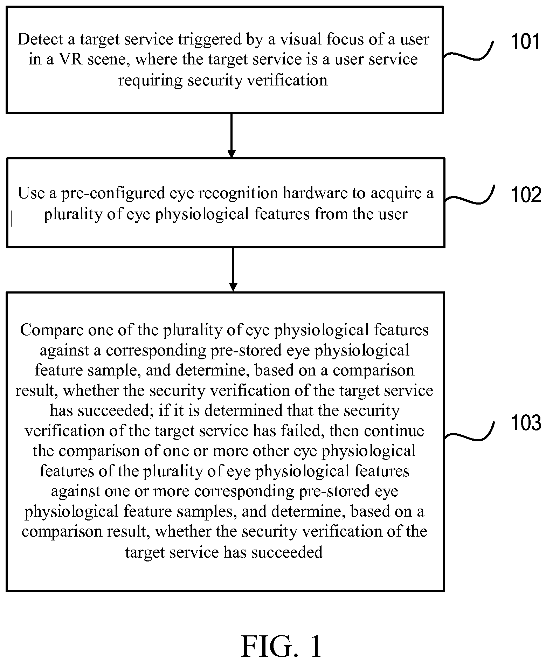

FIG. 1 shows a VR scene-based service verification method provided by an embodiment of this application, which is applicable to a VR client. Referring to FIG. 1, this method includes the following steps:
step 101, detecting a target service triggered by a visual focus of a user in a VR scene, wherein the target service is a user service requiring security verification;
step 102, using a pre-configured eye recognition hardware to acquire a plurality of eye physiological features from the user; and
step 103, comparing one of the plurality of eye physiological features against a corresponding pre-stored eye physiological feature sample, and determining, based on a comparison result, whether the security verification of the target service has succeeded; if it is determined that the security verification of the target service has failed, then continuing the comparison of one or more other eye physiological features of the plurality of eye physiological features against one or more corresponding pre-stored eye physiological feature samples, and determining, based on a comparison result, whether the security verification of the target service has succeeded.

The VR client refers to client software developed based on the VR technology for providing a user with a three-dimensional immersive experience, e.g., a VR-based APP. The VR client outputs a VR scene model developed by a developer to the user through a VR terminal connected with the VR client, so that the user wearing the VR terminal gets the three-dimensional immersive experience in the VR.

The target service may be a user service that is executed by the user in the VR scene and requires security verification, including a local task or an online task that is initiated by the user in the VR scene and requires security verification.

For example, in an actual application, the target service may be a fast payment service in certain specific VR scenes, e.g., an order payment in VR shopping, a tip payment in VR live broadcasting, a credit recharge in a VR game, a video-on-demand payment in a VR video, or, other local service requiring security verification besides the fast payment service, e.g., a VR terminal unlocking service of the user.

The technical solution of this application is described below in details through four phases: VR scene model creation, triggering of the target service, security verification of the target service, and execution of the target service.

### 1) VR scene model creation

In this embodiment, a developer may create a VR scene model with a specific modeling tool. The modeling tool is not particularly limited in this embodiment. For example, the developer may create the VR scene model with an established modeling tool such as Unity, 3dsMax, Photoshop, etc.

When the developer creates the VR scene model with the modeling tool, the VR scene model and the texture mapping of the VR scene may be derived from a real scene in real life. For example, a material texture map, and a planar model of the real scene may be acquired by a camera in advance, then a modeling tool such as Photoshop or 3dmax may be used to process the textures and construct a three-dimensional (3D) model of the real scene. The textures and the 3D model are imported into a unity3D platform (U3D), images are rendered along with sound effects, graphical interfaces, plug-ins, lighting, etc. in the U3D platform. Then interactive features are implemented, and the modeling of the VR scene model is finally completed.

In this embodiment, besides the VR scene model, the developer also needs to create a 2D or 3D service interface corresponding to the target service with the modeling tool in the VR scene model such that the user can execute the target service in the VR scene.

For example, in a disclosed embodiment, the service interface may be a fast payment interface (e.g., a virtual checkout interface) created with the modeling tool. The user may interact with the payment interface through a specific interaction operation (e.g., positioning an operation focus into the payment interface) to complete fast payment in the VR scene.

### 2) Triggering of the target service

In this embodiment, after the developer completes the modeling of the VR scene model and the service interface, the VR client may output the VR scene model and the service interface to the user through a VR terminal (e.g., a VR helmet) connected with the VR client.

It should be noted that, by default, the VR client may only output the VR scene model to the user. While immersing in the VR scene, the user may trigger the VR client to execute the target service by interacting with the VR client, and the VR client outputs the service interface in the VR scene.

In this application, in order to ensure that the user may quickly trigger the target service in a more intuitive interaction mode, a visual focus control mechanism may be introduced in the VR client. While wearing the VR terminal to enjoy the immersive experience, the user may control the position of the visual focus in the VR scene by rotating eyeballs, which is a more intuitive interaction mode to trigger the fast payment service. In a disclosed embodiment, the VR client may carry an eye tracking hardware and a corresponding eye tracking algorithm. While the user wearing the VR terminal to enjoy the immersive experience, eye tracking can be executed for the user by using the eye tracking hardware and through the carried eye tracking algorithm, then the visual focus of the user in the VR scene is determined based on a result of the eye tracking, and a corresponding prompt is outputted to the user at a position corresponding to the visual focus in the VR scene.

The eye tracking hardware may specifically include a visual module for acquiring eye physiological features from the user. In an embodiment, the visual module may specifically include a camera, and an LED light source matching with the camera for light compensation when acquiring the eye physiological features from the user.

For example, when the VR client conducts eye tracking for the user, the visual module may first be used to capture an image of eyes of the user, to preliminarily position the eyes of the user based on the eye tracking algorithm, and to locate the eyes of the user in the image. Then accurate position of the eyeballs of the user is determined based on the specific eye physiological features of the user (e.g., accurate position the eyeballs of the user is determined based on the eyeprint feature or iris feature of the user).

After accurate positioning of the eyeballs of the user, the direction of sight of the user may be further calculated based on a corresponding algorithm. Mapping position coordinates of the visual focus of the user in the screen of the VR terminal are calculated based on the direction of the sight of the user, then the mapping position coordinates of the visual focus in the screen of the VR terminal are converted into mapping position coordinates corresponding to the VR scene model based on a conversion relationship between the coordinate system of the screen of the VR terminal and the coordinate system of the VR scene model, and the converted mapping position coordinates are the visual focus of the user in the VR scene.

It should be noted that the type of the camera in the visual module generally depends on the type of the eye physiological feature used by the eye tracking algorithm to accurately position the eyeballs of the user. For example, when iris feature is used by the eye tracking algorithm to accurately position the eyeballs of the user, since the iris acquisition is completed under an infrared illumination condition, the camera in the visual module may be an infrared camera, and the LED lamp may be an infrared LED lamp.

Similarly, when eyeprint feature is used by the eye tracking algorithm to accurately position the eyeballs of the user, since the eyeprint acquisition is completed in a regular lighting environment, the camera in the visual module may be a regular RGB camera, and the LED lamp may be a regular LED lamp.

In this embodiment, since the eye tracking completely simulates human real visual experience, when the visual focus of the user in the VR scene is finally determined by the eye tracking process described above, in order to reduce the image rendering cost in the VR scene model as much as possible without affecting the visual experience of the user, the rendering ranges of different areas in the VR scene may be configured differently based on the determined position coordinates of the visual focus of the user.

Specifically, after the visual focus of the user in the VR scene is determined, the VR client may identify a target visual area of a preset size centered on the visual focus in the VR scene, wherein the preset size is customized based on the actual need. For example, the target visual area may be a circular area with the visual focus as a center and the preset size as a radius.

After the target visual area is determined, the VR client may visually render a visual image corresponding to the target visual area with a relatively high first rendering precision (e.g., 100% rendering). At the same time, the VR client may visually render visual images of other visual areas outside the target visual area with a second rendering precision lower than the first rendering precision.

Additionally, in order to further reduce the image rendering cost in the VR scene model, other visual areas outside the target visual area may be rendered with gradient decreasing precisions. In an embodiment, the VR client may further divide the visual area into a plurality of subareas according to the distance to the visual focus, and set different rendering precisions based on the distance between each subarea and the visual focus. Specifically, the rendering precision of each divided subarea may decrease gradually as the distance to the visual focus increases. That is, the farther away a divided subarea from the visual focus, the lower its rendering precision.

In this embodiment, the VR scene model may provide a preset virtual component for triggering the target service. While enjoying an immersive experience in the VR scene, the user may execute a target service by controlling the movement of the visual focus to stay in the area where the virtual component is located, and selecting the virtual component by a stay timeout mechanism to trigger the target service.

In one embodiment, after conducting the eye tracking on the user to determine the visual focus of the user in the VR scene, the VR client may further track the movement of the visual focus and determine whether the visual focus has stayed in the area where the virtual component is located. While the visual focus staying in the area where the virtual component is located, the VR client may switch the virtual component to an operable state (e.g., highlighting the virtual component), enable a timer for counting the stay time of the visual focus, and determine whether the stay time has reached a preset threshold (the preset threshold is customizable based on the requirements). If the stay time has reached the preset threshold, the virtual component may be selected to trigger the target service.

For example, in the VR scene, the virtual component may be a preset virtual button provided by the VR client, and the virtual button may be used to trigger the target service to be executed in the VR scene. When the user, while enjoying the immersive experience in the VR scene, needs to execute a target service, he/she may control the movement of the visual focus by rotating his/her eyeballs to stay in the area where the virtual component is located for N seconds (i.e., the above preset threshold) to select the virtual component to trigger the target service in the VR scene.

Obviously, other than using the visual focus to trigger the target service as described above, the target service may also be triggered by other forms in actual applications. For example, the user may directly interact with (e.g., click) the virtual component through a three-dimensional gesture or a head gesture to select the virtual component to trigger the target service. The target service may be triggered by using a control device (e.g., a handle, a joystick, etc.) connected to the VR terminal to control the movement of the operation focus to select the virtual component to trigger the target service. Alternatively, through a voice recognition module carried by the VR terminal, the target service may be triggered by voice commands. The detail implementations are omitted in this application.

### 3) Security verification of the target service

In this embodiment, in order to expedite the security verification of the target service when the user executes the target service in the VR scene, a plurality of eye physiological features of the user who initiates the service may be acquired using the eye recognition hardware configured in the VR terminal in combination with certain acquisition algorithms for eye physiological features. The plurality of eye physiological features may complement with each other to expedite the security verification of the target service.

The plurality of eye physiological features may include an eyeprint feature and an iris feature of the user. The acquisition algorithms for eye physiological features may include an iris acquisition algorithm and an eyeprint acquisition algorithm preset by the VR client. The eye recognition hardware may include a lens carried by the VR terminal and corresponding to the eyes of the user, a visual module for acquiring the eyeprint feature, and a visual module for acquiring the iris feature.

The visual module for acquiring the eyeprint feature may include an RGB camera used in combination with the lens, and an LED light source used in combination with the RGB camera for light compensation on the RGB camera. The visual module for acquiring the iris feature may include an infrared camera used in combination with the lens, and an infrared LED light source used in combination with the infrared camera for light compensation on the infrared camera. That is, in this application, the VR terminal may simultaneously carry an RGB camera for acquiring the eyeprint feature and an infrared camera for acquiring the iris feature (for example, an RGB camera and an infrared camera may be respectively mounted at positions corresponding to one of the eyes of the user in the VR terminal).

The specific mounting positions of the RGB camera and the infrared camera of the virtual modules in the VR terminal are not particularly limited in this application. In a disclosed embodiment, the cameras may be positioned on the outer surface of the lens corresponding to the eyes of the user (i.e., the lens is ensured to be located between the eyes of the user and the cameras), face the eyeballs of the user, and tilt upwardly by a certain angle (e.g., 60 degrees, or other angles). It should be noted that in order to save the hardware cost of the VR terminal, a same visual module may be used for the eye tracking hardware and for acquiring the eye physiological features of the user. For example, when eye tracking for the user is based on the eyeprint feature of the user, the visual module for acquiring the eyeprint feature may be used for eye tracking. Correspondingly, when eye tracking for the user is based on the iris feature of the user, the visual module for acquiring the iris feature may be used for eye tracking.

In addition, it should be noted that the eye recognition hardware and the eye tracking hardware carried on the VR terminal may be internal hardware in the hardware architecture of the VR terminal, or external hardware, or internal hardware in a third-party mobile terminal (e.g., a smart phone) connected to the VR terminal, which is not particularly limited in this application.

In this embodiment, when the VR client uses the eye recognition hardware to acquire the eye physiological features of the user, the VR client may use a pre-configured brightness detection hardware (e.g., a light sensor) to detect the brightness of the internal acquisition environment of the VR terminal to obtain a brightness value, and determine whether the detected brightness value is lower than a preset threshold. If the detected brightness value is lower than the preset threshold, the brightness value of the internal acquisition environment of the VR terminal is low, which may affect the acquisition accuracy. In this case, the VR client can immediately turn on the LED light source to compensate the camera with light.

Using an example where the plurality of eye physiological features are eyeprint feature and iris feature, a process of security verification on the target service initiated by the user based on the acquired eyeprint and iris features of the user is elaborated below.

In this embodiment, in the initial state, a user may register his/her own eyeprint feature and iris feature in advance through the VR client, so as to establish a binding relationship between the account information of the user and the eyeprint feature and iris feature of the user on a business server.

The account information of the user may specifically include a service account the user used to execute the target service. For example, when the target service is a payment service, the account information of the user may be a payment account of the user, and the user may bind the payment account with the eyeprint feature and iris feature of the user by eyeprint and iris registration.

Upon completing the eyeprint and iris registration, the user may use his/her own eyeprint feature and iris feature later in the VR scene to carry out fast security verification on the initiated target service, and no longer need to input information such as a service password to verify the target service.

In a disclosed embodiment, when the user registers eyeprints and irises, the user may first logs in to the VR client by using the account information, and then complete eyeprints and irises acquisition under the prompt of the VR scene output by the VR client. The VR client may send the acquired eyeprint feature, iris feature and the login account used by the user to the business server in a form of a registration message. Upon receiving the registration message sent by the VR client, the business server may bind the eyeprint feature and the iris feature of the user, serving as an eyeprint feature sample and an iris feature sample respectively, with the login account of the user and establish a mapping relationship, and then store the established mapping relationship to a preset feature database.

In a disclosed embodiment, in order to improve the security of the eyeprint and iris registration process, the VR client may conduct identify verification for the register before sending the registration message to the business server.

For example, the user may be prompted to provide a login password or other information capable of identifying the user to verify the identity of current register. Upon a successful verification, the VR client may send the registration message to the business server to complete the eyeprint and iris registration.

In this way, an unauthorized user may be prevented from using his/her own eyeprint or iris feature to complete the binding with the login account of an authorized user, thereby improving the security of the eyeprint and iris registration.

After a user completes the registration of the eyeprint and iris features, when the user triggers a target service by controlling the visual focus in the VR scene, the VR client may start a security verification process on the target service based on the eyeprint and iris features the user registered.

Conventional security verification processes typically rely on one single eye physiological feature to verify user identity. In this embodiment, in order to further improve the accuracy of security verification of user identity based on the eye physiological features, this application proposes a technical solution of taking into account a plurality of eye physiological features of the user for user identity verification.

In an example where the plurality of eye physiological features are eyeprint feature and iris feature, the eyeprint feature and the iris feature may be used at the same time because the eyeprint feature and the iris feature can achieve a mutual complementary effect on the user identity security verification.

On one hand, using eyeprint feature for eyeprint recognition on the user can avoid the problem that the user identity verification result becomes inaccurate due to the distortion of the iris feature as a result of a user wearing color contact lenses or suffering from eye diseases such as cataract. However, the eyeprint recognition on the user based on the eyeprint feature has a drawback that the eyeprint feature acquisition requires sufficient visible light, but the lighting condition inside the VR terminal is difficult to control, and even if a light compensation module is added, satisfying light condition for the acquisition of the eyeprint feature cannot be completely guaranteed.

On the other hand, when the eyeprint feature is used for iris recognition on the user, the acquisition of the iris feature is based on infrared light and thus does not require as strict lighting condition as that for eyeprint feature acquisition. The iris feature also has a much higher biological uniqueness than the eyeprint feature. However, the iris-based recognition has a drawback that iris feature may be easily distorted if the user wears color contact lenses or suffers from eye diseases such as cataract, causing an inaccurate user identity verification result.

Thus, combining the iris recognition and the eyeprint recognition can achieve the mutual complementary effect, thereby significantly improve the accuracy of the user identity verification.

In this embodiment, when a user wearing the VR terminal successfully triggers a target service in a VR scene, the VR client may use included eye recognition hardware to acquire the eyeprint feature and the iris feature of the user.

In a disclosed embodiment, the VR client may conduct a life detection for the user wearing the VR terminal before acquiring the eyeprint feature and the iris feature of the user.

In this case, the VR terminal may conduct a life detection on the user wearing the VR terminal before acquiring the eyeprint feature and the iris feature to determine that it is an actual user that is using the VR terminal. In this way, attempts to bypass the security verification using fake eyeprint feature and iris feature of the user (e.g., using a picture of an eye) can be effectively prevented.

In this embodiment, the methods that the VR client can use to conduct a life detection on the user wearing the VR terminal are not limited. For example, the life detection on the user may be completed by blink recognition, heartbeat recognition, etc.

After the life detection on the user is completed, the VR client may output a prompt of acquiring eye physiological features of the user in the view of the user in the VR scene, so as to inform the user the acquisition of the eye physiological features (e.g., the eyeprint feature) for the security verification of the target service.

For example, when the target service is a VR scene-based fast payment service, the VR client may output a text prompt message of "Please scan eyeprints and irises to complete the payment verification" in the view of the user in the VR scene.

In this embodiment, when the VR terminal successfully acquires the eyeprint feature and the iris feature from the user through the eye recognition hardware, the VR terminal may communicate with the business server based on the acquired eyeprint feature to complete the security verification of the target service.

In a disclosed embodiment, the business server may enable eyeprint and iris recognition services, and provide a recognition interface to the VR client.

For example, when the business server is a business platform built based on a server cluster, a recognition server for providing eyeprint and iris recognition services to the VR client may be provided, and an access interface may be provided to the VR client.

After successfully acquiring the eyeprint feature and the iris feature of the user, the VR client may construct an eyeprint verification request based on the account information currently used by the user to log in the VR client and the acquired eyeprint feature and iris feature of the user, then access the eyeprint recognition interface provided by the business server, and submit the eyeprint recognition request to the business server.

Upon receiving the eyeprint verification request from the VR client, the business server may analyze the eyeprint verification request to obtain the eyeprint feature, the iris feature and the account information of the user in the request, then search, based on the account information, an eyeprint feature sample and an iris feature sample registered by the user in the feature database, and compare the eyeprint feature and the iris feature with the eyeprint feature sample and the iris feature sample registered by the user and stored in the feature database.

In this embodiment, the business server may acquire only one of the eyeprint feature and the iris feature of the user by default to compare with the corresponding feature sample in the feature database, and determine, based on a comparison result, whether the security verification of the target service has succeeded.

In an actual application, the type of the eye physiological feature used by the business server by default and the order of comparison are not particularly limited. By default, the business server may only compare the eyeprint feature with the eyeprint feature sample registered by the user in the feature database, or only compare the iris features with the iris feature sample registered by the user in the feature database.

After the business server compares one of the eyeprint feature and the iris feature of the user with the corresponding feature sample in the feature database, it may determine that the security verification of the target service has succeeded and then return the verification result to the VR client if that one of the eye physiological features is completely identical to the corresponding eye physiological feature sample registered by the user.

In contrast, after the business server compares one of the eyeprint feature and the iris feature of the user with the corresponding feature sample in the feature database, it may determine that the security verification of the target service has failed if that one of the eye physiological features is different from the corresponding eye physiological feature sample registered by the user (which may be caused by the distortion of the acquired eye physiological feature). In this case, the business server may continue to use the other eye physiological feature of the eyeprint feature and the iris feature of the user to compare with the corresponding feature sample in the feature database, and determine again, based on a comparison result, whether the security verification of the target service has succeeded.

If, after the comparison, it is determined that the other eye physiological feature is identical to the corresponding eye physiological feature sample registered by the user, the business server may determine that the security verification of the target service has succeeded, and then return a corresponding verification result to the VR client. Otherwise, if the other eye physiological feature is different from the corresponding eye physiological feature sample registered by the user, the business server may determine that the security verification of the target service has failed, and also return a corresponding verification result to the VR client.

It should be noted that the verification result returned by the business server to the VR client specifically may be a Boolean return value (i.e., false and true). For example, when the security verification has succeeded, the business server may return a true value to the VR client; otherwise, if the security verification has failed, the business server may return a false value to the VR client.

In a disclosed embodiment, other than solely depending on a comparison result of the plurality of acquired eye physiological features with the corresponding eye physiological feature samples registered by the user to determine whether the security verification of the target service has succeeded, the comparison result may also be used as at least a partial reference in security verification in applications with enhanced security requirements.

In this embodiment, "at least a partial reference" means, when determining whether the security verification has succeeded, the comparison result can be either a sole factor or one of a plurality of factors for determining whether the security verification of the target service has succeeded.

In one case, if the comparison result is used as a sole factor for determining whether the security verification of the target service has succeeded, the security verification of the target service may be determined to be succeeded if the comparison result is true (i.e., the two are identical).

In another case, if the comparison result is used as one of a plurality of factors for determining whether the security verification of the target service has succeeded, and the comparison result is true, further security verification of the target service based on other factors may still be needed. The security verification may be determined to be succeeded if the further security verification is passed.

The specific method of further security verification on the target service is not particularly limited in this embodiment, and can be customized by a person of ordinary skill in the art based on actual service requirements.

For example, if the target service is a fast payment service in a VR scene, when the acquired eyeprint feature of the user is completely identical to the eyeprint sample registered by the user, the VR client may also consider whether any other types of security risks are associated with the user currently logs in to the VR client (e.g., whether the login account used by the user is a bound account commonly used by the VR client, or whether the VR terminal where the VR client is located is a VR terminal frequently used by the user, etc.) Then the VR client may ask the user to input the information such as a password or a verification code for quickly verifying the user identity or authorization of the VR terminal, so as to execute further security verification on the fast payment service. After the security verification has succeeded, the VR client may determine that the fast payment service has passed the security verification, and successfully complete the fast payment.

It should be noted that, in the aforementioned embodiments, the acquired eyeprint feature and iris feature of the user may be uploaded to the business server to perform the security verification on the target service initiated by the user based on the eyeprint feature and the iris feature, the security verification of the target service can also be completed by the VR client locally in actual applications.

In this case, the user may leave the eyeprint feature and the iris feature locally at the VR client. Upon receiving the eyeprint feature and the iris feature from the user, the VR client may bind the eyeprint feature and the iris feature with the account information of the user locally.

After the user triggers the target service in the VR scene, the VR client may acquire the eyeprint feature and the iris feature of the user, and verify whether the security verification of the target service has succeeded using a same process as that conducted by the business server, which is not repeated here.

### 4) Execution of the target service

In this embodiment, after the security verification of the target service has succeeded, the VR client may execute the target service.

When the target service is an online service, the VR client may execute the service through further business interaction with the business server.

In this case, the VR client may receive the security verification result of the target service returned by the business server. If the security verification has succeed (e.g., a true value is returned), the VR client may provide a service interface corresponding to the target service in the VR scene and construct a service request by acquiring service parameters related to the target service through the service interface. Through a business access interface provided by the business server to the VR client, the VR client may submit the service request to the business server, and further interact with the business server to execute the target service.

For example, when the target service is a fast payment service in a VR scene, the VR client may output a payment interface, acquire service parameters related to the payment service such as user information, order information and price information through the payment interface, then construct a corresponding payment request. The VR client then may send the payment request to the business server for the business server to process the payment request to complete the payment process.

Obviously, if the target service is a local service of the VR client, the service may be executed locally in response to the result that the local service security verification has succeeded.

For example, when the target service is a local unlocking service for the VR terminal, if the VR client installed in the VR terminal compares the acquired eyeprint feature of the user with the eyeprint feature sample registered by the user and finds that the two are completely identical, the VR terminal may be directly unlocked.

In an example of a user making a fast and secure payment in a VR shopping application by using an eye recognition hardware of a VR terminal to scan the eyeprint feature and iris feature of the user, a technical implementation of this application is described below. Obviously, it should be noted that this example is only exemplary and does not limit this application. In actual applications, the technical solution of this application may also be applied to other similar service scenes.

For example, through eyeprint or iris feature, a user may quickly recharge game currency in a VR game, quickly send a tip payment in a VR live broadcasting, quickly pay a video on-demand fee in a VR video, or quickly unlock a VR terminal, etc. Possible service scenes are not exhaustively enumerated in this embodiment.

In this case, the target service may be a fast payment service based on a VR scene, the VR client may be a payment client developed based on VR technology (e.g., VR pay of Alipay), and the business server may be a payment server (e.g., an Alipay platform constructed based on a server cluster).

In an initial state, the user may log in to the VR client using the payment account, complete the registration of eyeprint and iris features through the VR client, bind the eyeprint and the iris features with the payment account, and store the binding relationship to the feature database in the payment server in the cloud. The specific registration process is not repeated herein. When the registration is completed, the user may complete fast security payment through the eyeprint and the iris features in the VR scene.

While wearing the VR terminal to enjoy the VR shopping experience, the user may be presented a number of available merchandizes in the VR scene. The user may browse an inventory list provided in the VR scene and choose a merchandize of his/her choice for purchase.

After the user selects a merchandize of his/her choice from the inventory list, the position of the visual focus in the VR scene may be controlled through a natural interaction mode such as eyeball rolling to stay over the area of a "payment button" provided in advance in the VR scene for N seconds to trigger the VR client to start a merchandize payment process.

After the merchandize payment process is started, the VR client may first execute a life detection on the user. Upon a successful life detection, a prompt message of "Please scan eyeprint and iris to complete the payment verification" may be displayed to the user in the view of the user in the VR scene.

After the eyeprint and iris acquisition of the user is completed, the VR client may construct a verification request based on the acquired eyeprint feature, iris feature, and the login account used by the user to log in the VR client, and submit the verification request to the payment server. The payment server may compare one of the eyeprint feature and the iris feature of the user with the corresponding eye physiological feature sample registered by the user. If the features being compared are identical, the security verification of the payment service has succeeded, and the payment server may return a Boolean true value to the VR client.

If the features being compared are different, the payment server may further compare the other eye physiological feature of the eyeprint feature and the iris feature with the corresponding eye physiological feature sample registered by the user. If they are identical, the security verification of the payment service has succeeded, and the payment server may return a Boolean true value to the VR client.

Upon receiving a result returned by the payment server that the security verification has succeeded, the VR client may output a payment interface, acquire parameters related to the payment service, such as user information, order information and price information, through the payment interface, then construct a corresponding payment request, and send the payment request to the payment server. The payment server may process the payment request to complete fast payment for the merchandize.

In actual applications, a payment process of "verification-exempted small transaction" may be introduced to expedite the payment speed. In this case, when a user triggers the payment process for a selected merchandize through a voice command, the VR client may further check the payment amount, and verify whether the payment amount is lower than a preset amount (e.g., RMB 200). If the payment amount is lower than the preset amount, the VR client may directly construct a payment request and send the payment request to the payment server, and the payment server may process the payment request to complete fast payment for the merchandize. If the payment amount is not lower than the preset amount, the VR client may complete the security verification of the payment service using the eyeprint feature and the iris feature of the user. The detailed processes are not repeated here.

It is worth noting that the techniques involved in the payment in the embodiment of this application may include, for example, Near Field Communication (NFC), WIFI, 3G/4G/5G, POS card swiping technology, two-dimensional code scanning technology, bar code scanning technology, Bluetooth, infrared imaging, Short Message Service (SMS), Multimedia Message Service (MMS), etc.

Corresponding to the embodiments of the aforementioned method, this application further provides embodiments for a device.

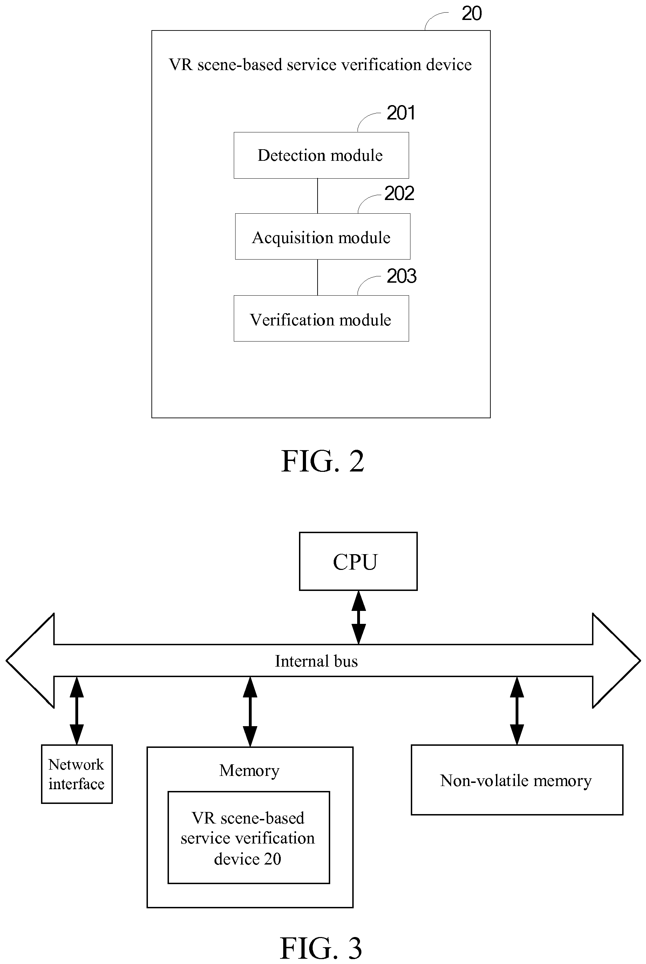

Referring to FIG. 2, this application provides a VR scene-based service verification device 20, applicable to a VR client.

Referring to FIG. 3, the hardware architecture of a VR terminal equipment bearing the VR scene-based service verification device 20 generally may include a CPU, a memory, a non-volatile storage, a network interface, an internal bus, etc. Taking software implementation as an example, the VR scene-based service verification device 20 generally may be considered a logic device combining hardware and software, formed by the CPU running a computer program stored in the memory. The device 20 may include:
a detection module 201, configured to detect a target service triggered by a visual focus of a user in a VR scene, where the target service is a user service requiring security verification;
an acquisition module 202, configured to use a pre-configured eye recognition hardware to acquire a plurality of eye physiological features from the user; and
a verification module 203, configured to compare one of the plurality of eye physiological features against a corresponding pre-stored eye physiological feature sample, and determine, based on a comparison result, whether the security verification of the target service has succeeded; and, if it is determined based on the comparison result that the security verification of the target service has failed, then continue to compare one or more other eye physiological features of the plurality of eye physiological features against one or more corresponding pre-stored eye physiological feature samples, and determine, based on a comparison result, whether the security verification of the target service has succeeded.

In this embodiment, the device 20 may further include:
a trigger module 204 (not shown in FIG. 2), configured to use a pre-configured eye tracking hardware to execute eye tracking for the user; determine, based on a result of the eye tracking, the visual focus of the user in the VR scene; judge whether the visual focus stays in an area where a preset virtual component is located in the VR scene, where the preset virtual component is used for triggering the target service; select the preset virtual component, and trigger the target service, if the mapping position stays in the area where the preset virtual component is located for longer than a preset threshold time.

In this embodiment, the device 20 may further include:
a rendering module 205, configured to identify a target visual area of a preset size centered on the visual focus in the VR scene; visually render a visual image corresponding to the identified target visual area based on a first rendering precision; and visually render visual images corresponding to other visual areas outside the target visual area based on a second rendering precision, where the second rendering precision is lower than the first rendering precision.

In this embodiment, the rendering precision of the other visual areas outside the target visual area may decrease gradually with the increase of the distance to the visual focus.

In this embodiment, the verification module 203 may be configured to:
determine, at least partially based on a result of comparing the acquired eye physiological features against the eye physiological feature samples, whether the security verification of the target service has succeeded.

In this embodiment, the plurality of eye physiological features may include an eyeprint feature and an iris feature. The eye recognition hardware may include an RGB camera for acquiring the eyeprint feature, and an infrared camera for acquiring the iris feature.

In this embodiment, the target service may include a payment service.

Other embodiments of this application will be apparent to those skilled in the art based on the descriptions in the specification and experimenting the disclosed embodiments. This application is intended to cover any variations, uses, or adaptations of this application following the general principles thereof and including such departures from this application as come within known or customary practice in the art. It is intended that the specification and examples be considered as exemplary only, with a true scope and spirit of this application being indicated by the following claims.

It will be appreciated that this application is not limited to the exact construction that has been described above and illustrated in the accompanying drawings, and that various modifications and changes can be made without departing from the scope thereof. It is intended that the scope of this application only be limited by the appended claims.

The foregoing descriptions are merely exemplary embodiments of this application, but are not intended to limit this application. Any modification, equivalent replacement, or improvement made without departing from the spirit and principle of this application should fall within the protection scope of this application.

## Claims

1. A virtual reality (VR) scene-based service verification method, applicable to a VR client, comprising:
detecting a target service triggered by a visual focus of a user in a VR scene, wherein the target service is a user service requiring security verification;
using a pre-configured eye recognition hardware to acquire a plurality of eye physiological features from the user;
comparing one of the plurality of eye physiological features against a corresponding pre-stored eye physiological feature sample, and determining, based on a comparison result, whether the security verification of the target service has succeeded; and
if it is determined that the security verification of the target service has failed, then continuing the comparison of one or more other eye physiological features of the plurality of eye physiological features against one or more corresponding pre-stored eye physiological feature samples, and determining, based on a comparison result, whether the security verification of the target service has succeeded.

2. The method according to claim 1, further comprising:
using a pre-configured eye tracking hardware to execute eye tracking for the user;
determining, based on a result of the eye tracking, the visual focus of the user in the VR scene;
judging whether the visual focus stays in an area where a preset virtual component is located in the VR scene, wherein the preset virtual component is used for triggering the target service; and
selecting the preset virtual component, and triggering the target service if a mapping position stays in the area where the preset virtual component is located and a stay time reaches a preset threshold.

3. The method according to claim 1, further comprising:
identifying a target visual area of a preset size centered on the visual focus in the VR scene;
visually rendering a visual image corresponding to the identified target visual area based on a first rendering precision; and
visually rendering visual images corresponding to other visual areas outside the target visual area based on a second rendering precision, wherein the second rendering precision is lower than the first rendering precision.

4. The method according to claim 3, wherein the rendering precision of the other visual areas outside the target visual area decreases gradually with the increase of a distance from the visual focus.

5. The method according to claim 1, wherein the step of determining, based on a comparison result, whether the security verification of the target service has succeeded comprises:
determining, at least partially based on a result of comparing the acquired eye physiological features against the eye physiological feature samples, whether the security verification of the target service has succeeded.

6. The method according to claim 1, wherein the plurality of eye physiological features comprise an eyeprint feature and an iris feature; and the eye recognition hardware comprises an RGB camera for acquiring the eyeprint feature, and an infrared camera for acquiring the iris feature.

7. The method according to claim 1, wherein the target service comprises a payment service.

8. A VR scene-based service verification device, applicable to a VR client, comprising:
a detection module, configured to detect a target service triggered by a visual focus of a user in a VR scene, wherein the target service is a user service requiring security verification;
an acquisition module, configured to use a pre-configured eye recognition hardware to acquire a plurality of eye physiological features from the user; and
a verification module, configured to compare one of the plurality of eye physiological features against a corresponding pre-stored eye physiological feature sample, and determine, based on a comparison result, whether the security verification of the target service has succeeded; and
if it is determined based on the comparison result that the security verification of the target service has failed, then continue the comparison of one or more other eye physiological features of the plurality of eye physiological features against one or more corresponding pre-stored eye physiological feature samples, and determine, based on a comparison result, whether the security verification of the target service has succeeded.

9. The device according to claim 8, further comprising:
a trigger module, configured to use a pre-configured eye tracking hardware to execute eye tracking for the user; determine, based on a result of the eye tracking, the visual focus of the user in the VR scene; judge whether the visual focus stays in an area where a preset virtual component is located in the VR scene, wherein the preset virtual component is used for triggering the target service; select the preset virtual component, and trigger the target service if a mapping position stays in the area where the preset virtual component is located and the stay time reaches a preset threshold.

10. The device according to claim 8, further comprising:
a rendering module, configured to identify a target visual area of a preset size centered on the visual focus in the VR scene; visually render a visual image corresponding to the identified target visual area based on a first rendering precision; and visually render visual images corresponding to other visual areas outside the target visual area based on a second rendering precision, wherein the second rendering precision is lower than the first rendering precision.

11. The device according to claim 10, wherein the rendering precision of the other visual areas outside the target visual area decreases gradually with the increase of a distance from the visual focus.

12. The device according to claim 8, wherein the verification module is configured to:
determine, at least partially based on a result of comparing the acquired eye physiological features against the eye physiological feature samples, whether the security verification of the target service has succeeded.

13. The device according to claim 8, wherein the plurality of eye physiological features comprise an eyeprint feature and an iris feature; and the eye recognition hardware comprises an RGB camera for acquiring the eyeprint feature, and an infrared camera for acquiring the iris feature.

14. The device according to claim 8, wherein the target service comprises a payment service.
